# FASCICULE DE BREVET EUROPEEN

(11) **EP 1 211 522 B1**
(45) Date de publication et mention de la délivrance du brevet: **28.09.2005**
(21) Numéro de dépôt: 01401652.1
(22) Date de dépôt: 21.06.2001
(51) Int. Cl.: G01V 8/12, G01C 3/08, H01L 31/02, H03K 17/94

(54) **Cellule photoélectrique**
Photoelektrische Zelle
Photoelectric cell

(30) Priorité: 26.06.2000 FR 0008280
(43) Date de publication de la demande: 05.06.2002
(73) Titulaire: SCHNEIDER ELECTRIC INDUSTRIES SAS, 92500 Rueil-Malmaison (FR)
(72) Inventeur: Charrier, Pierre, 86440 Migne-Auxances (FR); Guillot, Alain, 16730 Fleac (FR)

(56) Documents cités:
- EP-A- 0 923 140
- DE-A- 19 917 487
- FR-A- 2 787 589
- FR-A- 2 792 732

## Description

La présente invention concerne une cellule photoélectrique comportant un circuit récepteur optoélectronique muni d'un composant photorécepteur dont l'aire photoréceptrice est susceptible de recevoir une tâche lumineuse
- la cellule présentant un moyen affectant le circuit photorécepteur à un mode de fonctionnement reflex ou à un mode de fonctionnement de proximité.

Comme on le sait, une cellule photoélectrique de type "reflex" émet un faisceau lumineux vers un réflecteur et détecte un objet par interruption du faisceau lumineux réfléchi. Une cellule photoélectrique de type "proximité" émet un faisceau lumineux vers l'objet à détecter et exploite en triangulation le faisceau lumineux réfléchi par l'objet pour déterminer si sa distance est inférieure ou supérieure à une distance dite portée de détection. Une cellule photoélectrique pouvant opérer en mode reflex ou en mode proximité est décrite dans le document EP 923 140. La partie réceptrice de cette cellule présente plusieurs zones optosensibles reliées à un circuit de traitement par l'intermédiaire d'interrupteurs qui permettent de choisir le mode de fonctionnement de la cellule. Les zones considérées sont des zones de photodiode dont certaines sont activables au moyen des interrupteurs. Le document FR 2 787 589 décrit une cellule dont l'aire photosensible peut être partiellement masquée en mode reflex et complètement dégagée en mode proximité.

Il apparaît que parfois, notamment avec des cibles faiblement réfléchissantes situées à une distance assez grande, le rapport signal / bruit de la cellule risque d'être trop faible.

L'invention a pour but d'améliorer pour certaines applications la partie photoréceptrice d'une cellule utilisable aussi bien en mode reflex qu'en mode proximité.

Selon l'invention,
- l'aire photoréceptrice du composant présente deux zones photoréceptrices juxtaposées et différenciées par leur nature microélectronique,
- la première zone est une zone de photodiode et la deuxième zone une zone à détection analogique de position de la tâche lumineuse,
- la première zone photoréceptrice est dotée d'une première sortie active dans le mode de fonctionnement reflex et inactive dans le mode de fonctionnement proximité,
- la deuxième zone photoréceptrice est dotée d'une deuxième sortie et d'une troisième sortie (A3) actives dans le mode de fonctionnement de proximité et inactives dans le mode de fonctionnement reflex la deuxième sortie constituant la voie près, et respectivement la troisième sortie constituant la voie loin, de la deuxième zone photoréceptrice à détection analogique de position de la tâche lumineuse.

La zone à détection analogique de position a une troisième sortie qui est active en mode de fonctionnement de proximité et qui peut soit être distincte de la première sortie, soit confondue avec la première sortie.

Les première et deuxième sorties sont commutables de manière exclusive l'une de l'autre à un circuit de traitement au moyen d'un commutateur de sélection du mode de fonctionnement, qui constitue le moyen d'affectation de mode. Le composant est alors à trois sorties et présente une cathode commune aux deux zones.

La description va être faite ci-après d'un mode de réalisation non limitatif de l'invention, en regard des dessins annexés.
La figure 1 représente schématiquement un mode de réalisation du circuit photorécepteur d'une cellule conforme à l'invention.
La figure 2 est un autre schéma du circuit de la figure 1.

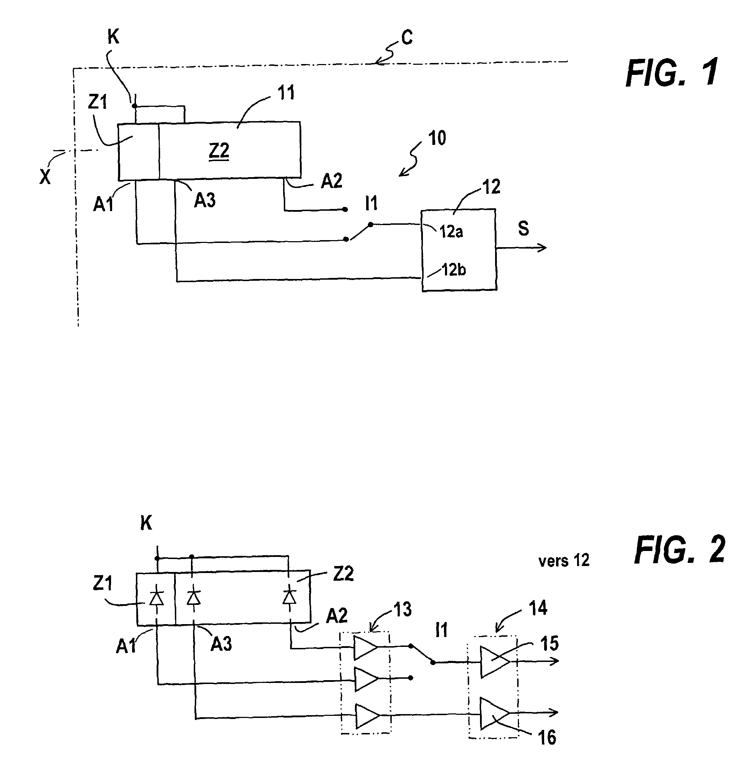

Le circuit récepteur optoélectronique 10 illustré sur la figure 1 fait partie d'une cellule photoélectrique C et comprend un composant photorécepteur 11 relié à un circuit de traitement 12 qui est destiné à fournir un signal S de présence d'objet. La partie émettrice de la cellule C a n'est pas ici représentée.

Le composant 11 est une puce comportant une zone Z1 rectangulaire ou sensiblement carrée et une zone adjacente Z2 rectangulaire juxtaposée à Z1 dans une direction X, plus longue que Z1 et de même largeur que Z1. Elle peut aussi être de largeur différente. Dans ce mode de réalisation, les zones Z1 et Z2 sont différenciées par leur nature microélectronique, la zone Z1 du composant 11 étant agencée en photodiode, tandis que la zone Z2 du composant est agencée en zone de détection analogique de position, par exemple du type PSD ou analogue.

La zone de photodiode Z1 fonctionne en délivrant sur une voie connectée à une anode A1 un courant sensiblement proportionnel à l'intensité reçue. La zone Z2 à détection analogique de position est apte, en recevant une tâche lumineuse dont la position est variable avec la distance de la cible, à fournir sur deux voies, à savoir une voie "près" et une voie "loin", des signaux analogiques respectifs dont la variation sert de base à une comparaison conduisant à déterminer la distance de la cible. La zone Z2 comprend à cet effet, vers ses extrémités selon la direction X, une anode A2 servant de borne "près" et une anode A3 servant de borne "loin". Les zones Z1 et Z2 présentent une cathode commune K. La différenciation des zones Z1 et Z2 est réalisée par tous moyens usuels en technologie des semiconducteurs.

L'une ou l'autre des anodes A1 et A2 est reliée à une entrée 12a du circuit 12 par l'intermédiaire d'un commutateur I1 à commande manuelle ou automatique, locale ou à distance, tandis que l'anode A3 est reliée en permanence à une autre entrée 12b du circuit 12.

Dans la position indiquée figure 1, le commutateur I1 active l'anode A1 et désactive l'anode A2, de sorte que la cellule est configurée en mode reflex. Dans la position indiquée figure 2, le commutateur I1 désactive l'anode A1 et active l'anode A2, de sorte que la cellule est configurée en mode proximité. Le schéma de la figure 2 illustre d'autre part la liaison des anodes A1, A2 et A3 avec le circuit 12 par un étage préamplificateur 13 et par un étage amplificateur 14 ; l'étage 14 comprend un amplificateur 15 en aval du commutateur I1 et un amplificateur 16 sur la liaison de A1 avec le circuit 12. En mode reflex, la zone Z1 (l'anode A1) est active, la zone Z2 (les anodes A2, A3) est (sont) inactive(s). En mode proximité, la zone Z1 (l'anode A1) est inactive et la zone Z2 (les anodes A2,A3) est (sont) active(s).

## Revendications

1. Cellule photoélectrique comportant un circuit récepteur optoélectronique muni d'un composant photorécepteur dont l'aire photoréceptrice est susceptible de recevoir une tâche lumineuse,
- la cellule présentant un moyen (I1) affectant le circuit photorécepteur à un mode de fonctionnement reflex ou à un mode de fonctionnement de proximité,
***caractérisée par le fait que*** :
- l'aire photoréceptrice du composant (11) présente deux zones photoréceptrices (Z1,Z2) juxtaposées et différenciées par leur nature microélectronique,
- la première zone (Z1) est une zone de photodiode, la deuxième zone (Z2) est une zone à détection analogique de position de la tâche lumineuse,
- la première zone photoréceptrice (Z1) est dotée d'une première sortie (A1) active dans le mode de fonctionnement reflex et inactive dans le mode de fonctionnement proximité,
- la deuxième zone photoréceptrice (Z2) est dotée d'une deuxième sortie (A2) et d'une troisième sortie (A3) actives dans le mode de fonctionnement de proximité et inactives dans le mode de fonctionnement reflex la deuxième sortie (A2) constituant la voie près, et respectivement la troisième sortie (A3) constituant la voie loin, de la deuxième zone photoréceptrice (Z2) à détection analogique de position de la tâche lumineuse.

2. Cellule selon la revendication 1, **caractérisée par le fait que** le moyen d'affectation du mode de fonctionnement reflex ou de proximité est un commutateur (I1), les première et deuxième sorties (A1,A2) étant commutables à un circuit de traitement (12) au moyen du commutateur (I1).

3. Cellule selon la revendication 2, **caractérisée par le fait que** les deux zones (Z1,Z2) ont une cathode commune.

## Patentansprüche

1. Photoelektrische Zelle mit einer optoelektronischen Empfängerschaltung, die mit einem Photoempfängerbauteil versehen ist, dessen Photoempfängerbereich einen Lichtfleck empfangen kann, wobei die Zelle ein Mittel (11) aufweist, das die Photoempfängerschaltung einem Reflex-Betriebsmodus oder einem Näherungs-Betriebsmodus zuordnet, **dadurch gekennzeichnet, dass**
- der Photoempfängerbereich des Bauteils (11) zwei nebeneinander angeordnete Photoempfängerzonen (Z1, Z2) aufweist, die sich durch ihre mikroelektronische Beschaffenheit unterscheiden,
- die erste Zone (Z1) eine Photodiodenzone, und die zweite Zone (Z2) eine Zone mit analoger Positionserfassung des Lichtflecks ist,
- die erste Photoempfängerzone (Z1) mit einem ersten im Reflex-Betriebsmodus aktiven und im Näherungs-Betriebsmodus inaktiven Ausgang (A1) versehen ist,
- die zweite Photoempfängerzone (Z2) mit einem zweiten (A2) und einem dritten Ausgang (A3) versehen ist, die im Näherungs-Betriebsmodus aktiv und im Reflex-Betriebsmodus inaktiv sind, wobei der zweite Ausgang (A2) den nahen Kanal und der dritte Ausgang (A3) den fernen Kanal der zweiten Photoempfängerzone (Z2) mit analoger Positionserfassung des Lichtflecks bildet.

2. Zelle nach Anspruch 1, **dadurch gekennzeichnet, dass** das Mittel zur Zuweisung des Reflex- oder Näherungs-Betriebsmodus ein Schalter (I1) ist, wobei der erste und der zweite Ausgang (A1, A2) mit Hilfe des Schalters (I1) an eine Verarbeitungsschaltung (12) schaltbar sind.

3. Zelle nach Anspruch 2, **dadurch gekennzeichnet, dass** die beiden Zonen (Z1, Z2) eine gemeinsame Kathode haben.

## Claims

1. Photoelectric cell comprising an opto-electronic receiver circuit provided with a photoreceiver component, the photoreceiving area of which is likely to receive a light spot, the cell presenting a means (I1) assigning the photoreceiver circuit to a reflex operating mode or to a proximity operating mode, **characterized by** the fact that:
- the photoreceiving area of the component (11) presents two photoreceiving areas (Z1, Z2) juxtaposed and differentiated by their microelectronic nature,
- the first area (Z1) is a photodiode area, the second area (Z2) is an area with analogue detection of the light spot position,
- the first photoreceiving area (Z1) is provided with a first output (A1) which is active in the reflex operating mode and inactive in the proximity operating mode,
- the second photoreceiving area (Z2) is provided with a second output (A2) and a third output (A3) which are active in the proximity operating mode and inactive in the reflex operating mode, the second output (A2) constituting the near channel, and respectively the third output (A3) constituting the far channel, of the second photoreceiving area (Z2) with analogue detection of the light spot position.

2. Cell according to Claim 1, **characterized by** the fact that the means of assigning the reflex or proximity operating mode is a switch (I1), and the first and second outputs (A1, A2) can be switched to a processing circuit (12) by means of the switch (I1).

3. Cell according to Claim 2, **characterized by** the fact that the two areas (Z1, Z2) have a common cathode.
